(19) Europäisches Patentamt
European Patent Office
Office européen des brevets

(11) Veröffentlichungsnummer: **0 286 008 B1**

(12) **EUROPÄISCHE PATENTSCHRIFT**

(45) Veröffentlichungstag der Patentschrift: **22.11.95**

(51) Int. Cl.$^6$: **C04B 41/48**, B27K 3/15

(21) Anmeldenummer: **88105226.0**

(22) Anmeldetag: **31.03.88**

# (54) Verwendung von wässrigen kationischen Kunststoffdispersionen zum Imprägnieren und Grundieren von saugfähigen Substraten.

(30) Priorität: **07.04.87 DE 3711681**

(43) Veröffentlichungstag der Anmeldung:
**12.10.88 Patentblatt 88/41**

(45) Bekanntmachung des Hinweises auf die Patenterteilung:
**22.11.95 Patentblatt 95/47**

(84) Benannte Vertragsstaaten:
**AT BE CH DE ES FR GB GR IT LI LU NL SE**

(56) Entgegenhaltungen:
**DE-A- 1 546 236**

(73) Patentinhaber: **HOECHST AKTIENGESELLSCHAFT**

**D-65926 Frankfurt am Main (DE)**

(72) Erfinder: **Bister, Erhard, Dr.**
**Danziger Strasse 4**
**D-6112 Gross-Zimmern (DE)**
Erfinder: **Huth, Hans-Ullrich,Dr.**
**Sofienstrasse 14**
**D-6070 Langen (DE)**
Erfinder: **Stelzel, Werner, Dr.**
**Marburger Weg 2**
**D-6232 Bad Soden am Taunus (DE)**

EP 0 286 008 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von feinteiligen wäßrigen kationischen Kunststoffdispersionen, die kationische Dispersionspolymerisate enthalten, zum Imprägnieren, Grundieren und Verfestigen von saugfähigen anorganischen Substraten, wie z.B. Mauerwerk, Beton, Putzflächen, Mauersteinen, wobei die Polymerisatpartikel der Dispersionen einen mittleren Teilchendurchmesser von 0,02 bis 0,2 µm aufweisen. Vergleichsweise zu wäßrigen anionischen oder nichtionogenen Kunststoffdispersionen zeigen wäßrige kationische Kunststoffdispersionen erfindungsgemäß überraschenderweise ein überlegenes Eindringungs- bzw. Permeationsvermögen in poröse mineralische Substrate. Dabei zeigen sie, im Gegensatz zu vergleichbaren anionischen Dispersionen, insbesondere ein überraschend vorteilhaftes Eindringvermögen auch in geschliffene Putzflächen, was für die Praxis von erheblicher Bedeutung ist.

Grundiermittel zum Vorbereiten von saugfähigen Anstrichuntergründen sind bekannt. Es werden an sie die Anforderungen gestellt, das Saugvermögen des Untergrundes zu verringern und gegebenenfalls den Untergrund zu verfestigen, so daß ein nachfolgender Anstrich einwandfrei haftet. Dazu sollte die Grundierung möglichst tief in das zu behandelnde Substrat eindringen.

Lösungen von Polymerisaten in organischen Lösungsmitteln können diese Anforderungen bekanntlich erfüllen. Nachteilig ist, daß solche Imprägniermittel durch den hohen Lösungsmittelanteil gesundheitsschädlich, insbesondere in geschlossenen Räumen, brennbar und wenig umweltfreundlich sind.

Demgegenüber können wäßrige Kunststoffdispersionen, deren Eigenschaftsbild - kleine Teilchengröße, niedrige minimale Filmbildetemperatur (MFT), niedriger Feststoffgehalt und niedrige Viskosität - auf das besondere Anwendungsgebiet der Grundierung von porösen mineralischen Oberflächen oder auch von Holz abgestimmt ist, hier entscheidende Vorteile bieten.

Aus der Praxis sind bereits wäßrige, anionische Kunststoffdispersionen zum Zwecke der Grundierung und Imprägnierung von saugfähigen, insbesondere porösen mineralischen Untergründen bekannt. Sie haben jedoch u.a. den Nachteil, häufig nicht feinteilig genug zu sein und außerdem nicht tief genug in die Oberflächen einzudringen.

Aus der DE-C 25 31 895 sind z.B. Polymerisatdispersionen mit einer mittleren Teilchengröße von 0,02-0,1 µm und einem Feststoffgehalt von 5-25 Gew.-% zum Imprägnieren und Grundieren von saugfähigen Substraten bekannt. Gemäß dieser Patentschrift, in der nur anionisch stabilisierte Dispersionen beschrieben sind, können zur Herstellung der Latices die auch für die Herstellung von Anstrichdispersionen üblichen Monomeren eingesetzt werden. Diese Produkte dringen verhältnismäßig gut in poröse Untergründe wie Putzflächen, Beton, Mauerwerk und gegebenenfalls auch Holz ein und verfestigen diese Substrate annähernd ebenso gut wie Polymerisatlösungen, bieten aber daneben alle bekannten Vorteile wäßriger Systeme.

Nachteilig ist, daß sie z.B. auf geschliffenem Gips, einem recht häufig in der Bauindustrie vorkommenden Substrat, nicht eindringen und verfestigend wirken können, sondern daß sich statt dessen schädlicherweise lediglich ein Film zwischen dem Substrat und dem Deckanstrich ergibt. Dazu kommt noch der weitere Nachteil, daß anionische, emulgatorstabilisierte Dispersionen sehr stark zum Schäumen neigen, sowohl bei der Handhabung als auch bei der Auftragung.

Aus der DE-A 15 95 136 ist die Herstellung und Verwendung von feinteiligen, carboxylgruppenhaltigen Acrylesterpolymerdispersionen, die z.T. Emulgator enthalten, bekannt. Derartige Produkte eignen sich für Textilappreturzwecke oder zur Bildung von klaren Schutzüberzügen auf Metall, gegebenenfalls für Anstrichfarben oder Emaillen. Zur Grundierung von saugenden Substraten, insbesondere von geschliffenen Gipsoberflächen, sind sie jedoch ungeeignet.

Kationische Polymerisatdispersionen sind als solche bereits bekannt. Sie werden bisher jedoch nicht auf dem Gebiet der Grundierung und Imprägnierung von porösen Untergründen eingesetzt. Sie können ihre kationische Ladung entweder durch Einbau basischer Gruppen, wie primäre, sekundäre oder tertiäre Aminogruppen in Verbindung mit Säuren, oder durch Polymerisation bzw. Copolymerisation von ethylenisch ungesättigten Trialkylammoniumverbindungen erhalten. Daneben führt im allgemeinen auch die Emulsionspolymerisation in Gegenwart von kationischen oberflächenaktiven Verbindungen, wie Fettaminen oder Fettaminoxethylaten sowie quaternären Alkylammoniumverbindungen, zu stabilen, positiv geladenen Polymerisatdispersionen. Weitere Herstellungsmöglichkeiten derartiger kationischer Produkte bestehen in der Verwendung von kationischen Schutzkolloiden bzw. in der Initiierung der Emulsionspolymerisation durch kationische Initiatoren, wie z.B. 2,2'-Azo-bis-(2-amidinopropan)-dihydrochlorid. Besonders geeignete Bindemitteldispersionen werden erhalten, wenn wenigstens ein Teil der kationischen Ladungen von kationischen, eingebauten Monomeren herrührt.

In der DE-A 10 53 783 wird z.B. die Herstellung quaternärer ethylenisch ungesättigter monomerer Ammoniumverbindungen durch Alkylierung basischer Ester oder Amide und deren Verwendung bei der Emulsions-, Lösungs- oder Blockpolymerisation in Verbindung mit Vinylestern, Styrol, Acrylestern und

Olefinen beschrieben. Wird die Polymerisation in Emulsion durchgeführt, so können oberflächenaktive Verbindungen aus der Gruppe der nichtionischen oder kationischen Tenside eingesetzt werden. Die erhaltenen Produkte eignen sich als Hilfsstoffe für die Textil-, Leder- und Papierindustrie, können aber auch zur Herstellung von Filmen, Fasern, Klebemitteln und Lacken verwendet werden. Über besondere Eigenschaften für einen Einsatz auf porösen, saugenden Untergründen ist nichts geoffenbart.

Weiterhin ist aus der DE-C 15 46 236 ein Verfahren zur Herstellung von geleimten Papieren durch Behandeln von Faserstoffen oder Papierbahnen mit wäßrigen kationischen Dispersionen bekannt. Die Dispersionspolymerisate bestehen zu 20-60 Gew.-% aus Styrol und/oder Acrylnitril, zu 20-60 Gew.-% aus (Meth-)Acrylester und zu 5-60 Gew.-% aus ethylenisch ungesättigten Verbindungen mit quaternärem Stickstoffatom. Die Druckschrift enthält jedoch keine Angaben über Teilchengrößen bzw. die Verwendung von Emulgatoren zu deren Steuerung, oder über den Einsatz derartiger Dispersionen als Bindemittel zur Grundierung oder Imprägnierung von porösen, saugfähigen Untergründen.

Aus der Patentschrift US-A 3 847 857 sind zwei Typen von Aminogruppenhaltigen Emulsionspolymerisaten bekannt. Typ I stellt ein hochgradig vernetztes Polymer dar, Typ II ein filmbildendes Polymerisat, das als Bindemittel für Pigmente geeignet ist. Vernetzte und auf der Oberfläche von Substraten filmbildende Polymerisate können nicht in die Tiefe von porösen mineralischen Untergründen eindringen und diese verfestigen.

Aufgabe der vorliegenden Erfindung was es deshalb, Grundierdispersionen aufzufinden, die ein überlegenes Permationsvermögen in porösen mineralischen Substraten aufweisen und den Untergrund verfestigen.

Es wurde nun überraschenderweise gefunden, daß man feinteilige, wäßrige niedrigviskose Dispersionen kationischer Polymerisate, die Comonomereinheiten mit einer oder mehreren OH-Gruppen enthalten, nicht nur vorteilhaft zum Imprägnieren, Grundieren und Verfestigen von porösen, saugfähigen anorganischen Substraten, wie z.B. Mauerwerk, Beton, Putzflächen, Mauersteinen, verwenden kann sondern daß man damit vorteilhaft auch geschliffene Putzflächen, insbesondere geschliffene Gipsflächen, imprägnieren und verfestigen kann. Dieses Verhalten kationischer wäßriger Dispersionen ist ferner auch deshalb von Vorteil, weil ihre Eindringtiefe und die Verfestigungswirkung zumindest ebenso gut ist wie diejenige bekannter Grundierungsmittel auf der Basis von Polymerisatlösungen in organischen Lösungsmitteln, ohne jedoch deren Nachteile zu besitzen.

Ein weiterer Vorteil der erfindungsgemäßen Grundierungsmittel auf der Basis von wäßrigen kationischen Kunststoffdispersionen besteht außerdem u.a. darin, daß sie bei der Handhabung in der Praxis, z.B. beim Abfüllen und Umfüllen oder beim Grundieren bzw. Imprägnieren der zu behandelnden Substrate, praktisch nicht oder nur ganz geringfügig schäumen.

Es ist ferner vorteilhaft, wenn die erfindungsgemäß zu verwendende kationaktive wäßrige Kunststoffdispersion nicht nur eine hohe Kationaktivität von mindestens 20 bis 200 µmol pro g Feststoff, gemessen bei pH 7, besitzt, sondern daß von dieser kationischen Ladung sich außerdem ein hoher Anteil, vorzugsweise 60 bis 99 %, auf der Oberfläche der Dispersionspartikel befindet. Die Bestimmung der kationaktiven Ladung der Dispersion kann z.B. in bekannter Weise titrimetrisch erfolgen. Darüber hinaus besitzen kationische Dispersionen außerdem stets ein positives Zeta-Potential.

Ein weiterer überraschender und unerwarteter und für die Praxis außerordentlich bedeutsamer Vorteil bei der Anwendung erfindungsgemäßer kationischer Grundierungsmittel besteht darin, daß sie eine Sperrwirkung gegen färbende, wasserlösliche Stoffe, wie Teerprodukte (Tabakrauch) und Farbstoffe entfalten können. Dies kann z.B. für das Baugewerbe, insbesondere bei der Renovierung von älteren Gebäuden, besonders vorteilhaft sein, da bei der Verwendung von anionischen Grundierungen und anionischen Deckanstrichen die überdeckten o.g. störenden Substanzen bekanntlich häufig die neu aufgetragenen Anstrichschichten durchdringen und zu einem ungleichmäßigen Farbbild führen. Demgegenüber kann erfindungsgemäß bei entsprechender Abstimmung der Grundierung mit dem Deckanstrich, beispielsweise eine kationische Grundierung und ein kationischer Deckanstrich oder vorzugsweise eine kationische Grundierung und ein anionischer Deckanstrich, die Permeation störender wasserlöslicher färbender Substanzen in die Anstrichschicht verhindern und dadurch, z.B. bei dekorativen Anstrichsystemen, das gewünschte Anstrichergebnis ohne Verlust unmittelbar erhalten werden.

Gegenstand der Erfindung ist demnach die Verwendung von wäßrigen kationischen Kunststoffdispersionen zum Imprägnieren und Grundieren von porösen Untergründen, dadurch gekennzeichnet, daß die kationischen Dispersionen kationische Dispersionspolymerisate enthalten, deren Makromoleküle Monomereinheiten (berechnet als Gew.-%, bezogen auf das Polymerisat) aus folgenden Monomergruppen einpolymerisiert enthalten:

a) 80-99 Gew.-% ethylenisch ungesättige Monomere aus der Gruppe Vinylester, Methacrylester, Acrylester, Vinylaromaten, Vinylchlorid, Ethylen, Acrylnitril, Diester von Maleinsäure und/oder Fumarsäure,

Vinylpyrrolidon,

b) 1-20 Gew.-%, vorzugsweise 1-10 Gew.-%, ethylenisch ungesättigte kationische wasserlösliche Monomere, die als kationische Substituenten quaternisierte Alkylammonium-, Alkylsulfonium-, Alkylphosphoniumgruppen, vorzugsweise Alkylammoniumgruppen, enthalten, deren Alkylreste jeweils 1 bis 6 C-Atome aufweisen, wobei einzelne oder mehrere der Alkylreste, vorzugsweise einzelne, durch $(C_5-C_7)$-Cycloalkyl, $(C_7-C_{24})$-Aralkyl, vorzugsweise Benzyl ersetzt sein können,

c) 0-19 Gew.-% ethylenisch ungesättigte hydrophile Monomere mit einer oder mehreren funktionellen Gruppen aus der Reihe COOH,

$-NR^1R^2$, $-CONR^1R^2$, wobei $R^1$ und $R^2$, die gleich oder verschieden sein können, für H oder $-CH_2OR$ mit R = H oder $(C_1-C_8)$-Alkyl stehen,

d) und bis zu 19 Gew.-% ethylenisch ungesättigte Monomere mit einer oder mehreren OH-Gruppen,

die Mindestkationenaktivität der Dispersionen 20 bis 200 $\mu$mol pro g Feststoff, gemessen bei pH 7, beträgt und sich 60 bis 99 % der kationischen Ladung auf der Oberfläche der Teilchen befindet, die Dispersionen eine minimale Filmbildungstemperatur (MFT) zwischen 0 und 40 °C, vorzugsweise 0 und 25 °C besitzen, und die Polymerisatpartikel der Dispersionen einen mittleren Teilchendurchmesser von 0,02 bis 0,2 $\mu$m, vorzugsweise 0,08 bis 0,15 $\mu$m aufweisen.

Erfindungsgemäß werden die kationischen Dispersionen zum Imprägnieren und Grundieren von porösen mineralischen Untergründen, besonders bevorzugt von Mauerwerk, Beton, Putzflächen, geschliffenem Putz, Mauersteinen, verwendet.

Der Feststoffgehalt der erfindungsgemäß zu verwendenden kationischen Dispersionen ist nicht kritisch. Vorzugsweise beträgt er jedoch 3 bis 40 Gew.-%, insbesondere 5 bis 20 Gew.-%, bezogen auf die Dispersion.

Eine weitere bevorzugte Ausführungsform der Erfindung besteht darin, daß die kationischen Dispersionen 0,1 bis 20 Gew.-%, vorzugsweise 0,1 bis 7 Gew.-%, oberflächenaktive Verbindungen aus der Gruppe der nichtionischen, kationischen oder amphoteren Emulgatoren sowie gegebenenfalls außerdem zwischen 0 und 5 Gew.-%, vorzugsweise 0,1 bis 2 Gew.-%, Schutzkolloide enthalten, jeweils bezogen auf die Gesamtmonomerenmenge.

In manchen Fällen kann es auch vorteilhaft sein, insbesondere z.B. aus Gestehkostengründen, wenn die kationischen Kunststoffdisperionen noch Anteile von nichtionogenen Kunststoffdispersionen, und zwar vorzugsweise bis zu 75 Gew.-%, insbesondere bis zu 50 Gew.-%, besonders bevorzugt bis zu 25 Gew.-%, nichtionogenes Dispersionspolymerisat, bezogen auf das kationische Dispersionspolymerisat, enthalten. Die Herstellung solcher Mischprodukte kann z.B. durch einfaches Vermischen entsprechender Ausgangsdispersionen in den gewünschten Mischungsverhältnissen erfolgen.

Die Herstellung erfindungsgemäßer, wäßriger kationischer Kunststoffdispersionen kann durch übliche Emulsionspolymerisation bzw. -copolymerisation, beispielsweise nach dem Zulauf- oder Voremulsionsverfahren bei 20-100 °C, vorzugsweise bei 50-90 °C, erfolgen. Man polymerisiert dabei in üblicher Weise einen Teil der Monomeren in der wäßrigen Flotte vor und dosiert die Restmenge unter Aufrechterhaltung der Polymerisationsreaktion kontinuierlich zu. Zur Erzielung eines besonders hohen Gehaltes an kationischer Oberflächenladung der Dispersionspartikel kann man z.,B. geeignete kationische, salzartige, ungesättigte, quaternäre Monomere, wie Alkylammonium-, Alkylsulfonium- bzw. Alkylphosphoniumverbindungen, vorzugsweise Alkylammoniumverbindungen, in ungleichmäßigen Mengen während des Polymerisationsverlaufs zudosieren, vorzugsweise in größerer Menge zusammen mit anderen Comonomeren am Anfang der Polymerisation. Der Feststoffgehalt der bei der Emulsionspolymerisation erhältlichen kationischen Kunststoffdispersionen liegt in dem bei der Herstellung von bekannten anionischen oder nichtionischen Anstrichdispersionen üblichen Bereich.

Bei der Herstellung erfindungsgemäß zu verwendender kationischer Kunststoffdisperisonen durch Emulsionscopolymerisation werden beispielsweise als Monomerkomponenten, wie sie der vorstehend unter a) aufgeführten Gruppe zugeordnet werden können, bevorzugt copolymerisationsfähige, ethylenisch ungesättigte Verbindungen eingesetzt, wie Vinylester von $(C_1-C_{18})$-Carbonsäuren, z.B. Vinylacetat, Vinylpropionat, Vinylversatat, Vinyllaurat, Vinylstearat; (Meth-)Acrylester von $(C_1-C_8)$-Alkoholen, z.B. Methylmethacrylat, Butylmethacrylat, Oktylmethacrylat, Ethylacrylat, Isobutylacrylat, 2-Ethylhexylacrylat; Vinylaromaten wie Styrol, Vinyltoluol; Vinylchlorid, Ethylen, Acrylnitril, Diester von Maleinsäure und/oder Fumarsäure, Vinylpyrrolidon. Die Monomeren können sowohl einzeln als auch in Mischung verwendet werden. Vorzugsweise werden diejenigen Monomeren eingesetzt, die zu verseifungsbeständigen und stabilen Dispersionspolymerisaten führen. Üblicherweise richtet man sich bei der Auswahl der Monomeren bzw. deren Mischungsverhältnissen nach den gewünschten anwendungstechnischen Eigenschaften der Dispersion, wobei zu deren Einstellung die dem Fachmann bekannten üblichen Auswahlkriterien Geltung finden können.

Ganz allgemein sei hierzu informatorisch auf die folgenden Literaturstellen hingewiesen:
F. Hölscher, Dispersionen Synthetischer Hochpolymerer, Teil 1, Springer Verlag Berlin, Heidelberg, New York (1969);
K.O. Calvert, Polymer Latices and their Applications, Applied Science Publishers Ltd., London 1982;
E.W. Duck, Encyclopedia of Polymer Science and Technology, Vol. 5, S. 801-856, John Wiley & Sons, New York, 1966.

Insbesondere sollte die minimale Filmbildungstemperatur (MFT) der kationischen Kunststoffdispersionen unterhalb des Bereichs oder höchstenfalls innerhalb des Bereichs der vorgesehenen Anwendungstemperaturen, d.h. zwischen 0 und 40 °C, liegen. Werden Polymerisate mit härterer Einstellung verwendet, so können zum Erreichen der erforderlichen MFT Filmbildungshilfsmittel oder äußere Weichmacher eingesetzt werden. Sind solche Zusätze nicht erwünscht, so sollte die MFT der kationischen Dispersion vorzugsweise im Bereich von 0 bis 25 °C liegen. Folgende Comonomerkombinationen eignen sich in Kombination mit kationischen Monomeren ganz besonders z.B. in den nachstehend angegebenen Gewichtsverhältnissen (GT = Gewichtsteile) für die Herstellung erfindungsgemäßer wäßriger kationischer Dispersionen:

| | |
|---|---|
| Butylacrylat / Methylmethacrylat | 10-90 GT / 90-10 GT |
| Butylacrylat / Styrol | 10-90 GT / 90-10 GT |
| Oktylacrylat / Methylmethacrylat | 5-80 GT / 95-20 GT |
| Oktylacrylat / Styrol | 5-80 GT / 95-20 GT |
| Vinylacetat / Butylacrylat | 40-80 GT / 60-20 GT |
| Vinylacetat / Vinylversatat | 50-80 GT / 50-20 GT |

Von besonderer Wichtigkeit für die erfindungsgemäßen Eigenschaften der kationischen Dispersionen ist die Art und Menge der bei der Polymerisation eingesetzten quaternisierten kationischen Monomeren, wie sie der vorstehend unter b) aufgeführten Gruppe zugeordent werden können. Bevorzugte kationische Monomere dieser Art sind z.B. Verbindungen der Formel (I),

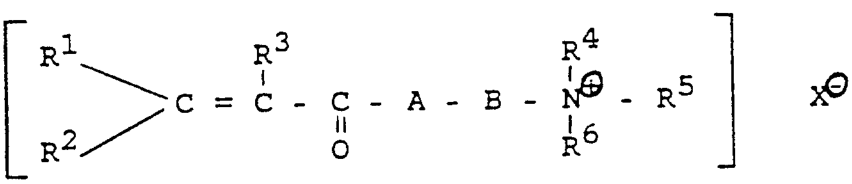 (I)

worin

| | |
|---|---|
| $R^1$,$R^2$, | die gleich oder verschieden sein können, vorzugsweise H, ($C_1$-$C_4$)-Alkyl, Phenyl, das gegebenenfalls durch ($C_1$-$C_5$)-Alkylgruppen substituiert ist, |
| $R^3$ | H oder $CH_3$, |
| $R^4$,$R^5$, | die gleich oder verschieden sein können, ($C_1$-$C_6$)-Alkyl, ($C_5$-$C_7$)-Cycloalkyl, das gegebenenfalls durch ($C_1$-$C_5$)-Alkylgruppen substituiert ist, |
| $R^6$ | ($C_1$-$C_6$)-Alkyl, Benzyl, $-CH_2CONH_2$, |
| A | NH oder O, |
| B | $(CH_2)_{2-4}$ , und |
| X | einen anorganischen oder organischen Säurerest, vorzugweise Halogen oder eine ($C_1$-$C_4$)-Carbonsäure, |

bedeuten. Besonders bevorzugt sind (Meth-)Acrylester bzw. (Meth-)Acrylamide der Formel (I).

Ferner Diallyldialkylammoniumverbindungen der Formel (II),

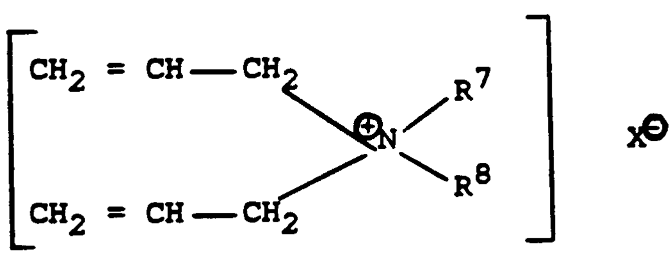 (II)

worin

$R^7$,$R^8$, die gleich oder verschieden sein können, $(C_1-C_{18})$-Alkyl, $(C_5-C_7)$-Cycloalkyl, das gegebenenfalls durch $(C_1-C_5)$-Alkylgruppen substituiert ist, Benzyl, Aralkyl mit 1 bis 18 C-Atomen in der Alkylgruppe, das gegebenenfalls zusätzlich substituiert ist, und

X einen anorganischen oder organischen Säurerest, vorzugsweise Halogen oder eine $(C_1-C_4)$-Carbonsäure,

bedeutet.

Bevorzugte Verbindungen der Formel (I) sind z.B. Trimethylammoniumethylacrylat-chlorid, Trimethylammoniumethylmethacrylat-chlorid, Dimethyl-n-butyl-ammoniumpropylmethacrylat-bromid, Benzyldimethylammoniumethylmethacrylat-chlorid, Trimethylammoniumneopentylacrylat-methosulfat, Acrylamidopropyltrimethylammonium-chlorid, Methacrylamidopropyltrimethylammonium-chlorid.

Bevorzugte Verbindungen der Formel (II) sind z.B. Diallyldimethylammonium-chlorid, Diallyldiethylammonium-chlorid, Diallyldibutylammonium-chlorid, Diallyldioktylammonium-bromid.

Für die Herstellung von verseifungsstabilen Dispersionen sind Monomere der Formel (I) mit Amidstruktur besonders bevorzugt.

Es ist ferner von besonderem Vorteil für die erfindungsgemäße Anwendung, wenn die kationischen Dispersionen innerhalb eines weiten $p_H$-Bereiches eine möglichst hohe Kationenaktivität aufweisen. Letzteres ist im allgemeinen dann der Fall, wenn die Gesamtkationenaktivität der Dispersion mindestens 20 bis 200 $\mu$mol pro g Feststoff, gemessen bei pH 7, beträgt und sich außerdem 60 bis 99 % der Ladung auf der Oberfläche der Dispersionspartikel befinden. Die Messung der Kationenaktivität kann z.B. titrimetrisch in bekannter Weise erfolgen (vgl. W. Schempp und H. T. Trau, Wochenblatt für Papierfabrikation 19, 1981, S. 726-732, oder J.P. Fischer und K. Löhr, Organic Coatings Science Technology, Vol. 8, S. 227-249, Marcel Dekker, Inc., April 1986).

Hinsichtlich des Eigenschaftsbildes der erfindungsgemäß zu verwendenden kationischen Polymerisatdispersionen kann es in manchen Fällen vorteilhaft sein, bei der Emulsionscopolymerisation noch weitere Comonomere zu verwenden, wie sie der vorstehend unter c) aufgeführten Gruppe zugeordnet werden können, nämlich ethylenisch ungesättigte Verbindungen mit funktionellen Gruppen wie -COOH, $-NR^1R^2$, $-CONR^1R^2$, wobei $R^1$ und $R^2$ gleich oder verschieden sein können und für H oder $-CH_2OR$ mit R = H oder $(C_1-C_8)$-Alkyl stehen.

Bevorzugte Verbindungen aus dieser Gruppe sind z.B. Methacrylsäure, Acrylsäure, Maleinsäure, Fumarsäure, Itakonsäure sowie die Halbester der drei letzteren Verbindungen, Dimethylaminoneopentylmethacrylat, Dimethylaminoneopentylacrylat, Dimethylaminopropylmethacrylamid, Dimethylaminopropylacrylamid, Dimethylaminoethylmethacrylat, Dimethylaminoethylacrylat, 2-N-Morpholinoethylmethacrylat, 2-N-Morpholinoethylacrylat, t-Butylaminoethylmethacrylat, t-Butylaminoethylacrylat, Methacrylamid, Acrylamid, N-Methylolmethacrylamid, N-Methylolacrylamid.

Bei der Verwendung von ungesättigten Carbonsäuren ist es wichtig, daß deren Anteil 5 Gew.-% nicht übersteigt und vorzugsweise im Bereich zwischen 0 und 2 Gew.-%, bezogen auf die Gesamtmenge aller Monomeren, liegt. Darüber hinaus darf das Zeta-Potential der resultierenden Dispersion keinesfalls in den negativen Bereich fallen.

Bevorzugte ethylenisch ungesättigte Verbindungen mit einer oder mehreren OH-Gruppen sind z.B. Hydroxyethylmethacrylat, Hydroxypropylmethacrylat, Polyhydroxypropylmethacrylat, Hydroxyethylacrylat, Hydroxypropylacrylat, Polyhydroxypropylacrylat,

Zur Einstellung der gewünschten Feinteiligkeit der Dispersion (mittlere Partikelgröße 0,02 bis 0,2 $\mu$m, vorzugsweise 0,05 bis 0,2 $\mu$m, insbesondere 0,08 bis 0,15 $\mu$m) werden bei der Emulsionspolymerisation kationische und/oder nichtionische und/oder amphotere tensioaktive Emulgatoren in einer Menge von 0,1 bis 20 Gew.-%, vorzugsweise 0,1 bis 7 Gew.-%, insbesondere 1 bis 5 Gew.-%, bezogen auf die gesamte Monomerenmenge, in üblicher Weise verwendet. Es hat sich gezeigt, daß die in den kationischen Dispersionen erfindungsgemäß benötigten Mengen dieser Emulgatoren die Wasserfestigkeit von Grundierungen und Imprägnierungen überraschenderweise nicht nachteilig beeinflussen.

Als Emulgatoren kommen bevorzugt übliche nichtionische Tenside, z.B. aus der Gruppe der Umsetzungsprodukte von aliphatischen, cycloaliphatischen, araliphatischen, aliphatischaromatischen, aromatischen Carbonsäuren, Alkoholen, Phenolen, Aminen mit Epoxiden, wie z.B. Ethylenoxid, sowie Blockcopolymerisate aus verschiedenen Epoxiden, wie z.B. Ethylenoxid und Propylenoxid, zur Anwendung. Weitere bevorzugte Emulgatoren sind z.B. primäre, sekundäre und tertiäre Fettamine in Kombination mit organischen oder anorganischen Säuren sowie außerdem tensioaktive quaternäre Alkylammoniumverbindungen. Darüber hinaus können in manchen Fällen auch amphotere Tenside mit zwitterionischer Struktur, beispielsweise vom Betaintyp, vorteilhaft sein. Die genannten Emulgatoren können sowohl einzeln als auch in Kombination untereinander oder miteinander in üblicher Weise verwendet werden.

Gegebenenfalls können bei der Herstellung der kationischen Dispersionen auch bekannte Schutzkolloide mitverwendet werden, und zwar bevorzugt solche auf der Basis von hochmolekularen organischen Verbindungen, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind z.B. Zelluloseäther, Polyvinylalkohole, Polysaccharide, Polyvinylpyrrolidone, wobei diese Verbindungen bevorzugt durch Aminogruppen oder quaternäre Ammoniumgruppen substituiert sein können. Die letzteren Gruppen können z.B. durch Substitution mittels Kationisierungsreagenzien, wie z.B. Glycidyltrimethylammoniumchlorid, in die zugrunde liegenden Makromoleküle eingeführt werden. Kationische Polyvinylalkohole können z.B. auch durch Verseifen entsprechender amino- und/oder ammoniumgruppenhaltiger Vinylacetatcopolymerisate erhalten werden. Die zu verwendenden Schutzkolloidmengen richten sich nach den gewünschten Dispersionseigenschaften, insbesondere der Feinteiligkeit der Dispersionspartikel. Bevorzugt werden bei der Emulsionspolymerisation gegebenenfalls Schutzkolloidmengen zwischen 0 und 5 Gew.-%, insbesondere zwischen 0,1 und 2 Gew.-%, bezogen auf die Gesamtmonomerenmenge, verwendet.

Zur Auslösung der Polymerisation bzw. Copolymerisation können alle in der Emulsionspolymerisation üblichen, vorzugsweise wasserlöslichen, und Radikalketten initiierenden Systeme, die auch anionischer Natur sein können, verwendet werden. Bevorzugte Initiatoren sind z.B. 2,2'-Azobis-(2-amidinopropan)-dihydrochlorid, 2,2'-Azobis-(N,N'-dimethylenisobutyramidin)-dihydrochlorid, 4,4'-Azobis-(4-cyanovaleriansäure), $H_2O_2$, t-Butylhydroperoxid, Persulfate wie Ammoniumpersulfat, Natriumpersulfat, Kaliumpersulfat, Redox-Systeme wie $H_2O_2$ und Ascorbinsäure, Peroxide und mehrwertige Metallsalze, t-Butylhydroperoxid und Rongalit, wobei Redox-Systeme vor allem zur Senkung des Restmonomerengehaltes in der Nachreaktionsphase der Polymerisation vorteilhaft sein können, ferner energiereiche Strahlung sowie übliche Photoinitiatoren.

Zur Molekulargewichtssteuerung können bei der Emulsionspolymerisation auch übliche Regler, wie z.B. Merkaptane oder Halogenkohlenwasserstoffe zur Molekulargewichtserniedrigung, oder aber, ggf. bis zu 5 Gew.-%, bezogen auf die Gesamtmonomerenmenge, mehrfach ethylenisch ungesättigte oder mehrfachfunktionelle und zur Vernetzung befähigte Verbindungen, wie z.B. Divinylbenzol, Ethylenglykoldimethacrylat, Ethylenglykoldiacrylat, Butandioldimethacrylat, Butandioldiacrylat, Triallylcyanurat, Melamin, Isocyanatoethylmethacrylat zur Molekulargewichtserhöhung verwendet werden.

Für die erfindungsgemäße Anwendung wäßriger, kationischer, feinteiliger Kunststoffdispersionen als Grundierungs- und Imprägnierungsmittel wird deren Feststoffgehalt vorzugsweise auf Werte von 3 bis 40 Gew.-%, insbesondere 5 bis 20 Gew.-%, bezogen auf die Dispersion, eingestellt. In diesen bevorzugten Feststoffkonzentrationsbereichen besitzen die kationischen Dispersionen eine niedrige Viskosität und ein hohes Eindringvermögen in saugfähige Substrate; sie entwickeln praktisch keinen störenden Schaum und lassen sich sehr vorteilhaft verarbeiten.

Die Erfindung wird durch die nachfolgenden Beispiele näher erläutert.

### Beispiel 1

In einem 4 l Rührreaktor werden 2417,8 g entsalztes Wasser (E-Wasser), 32,6 g Laurylpyridiniumchlorid (= 3 Gew.-%, bezogen auf die Gesamtmonomerenmenge), 117 g 50 gew.-%iges wäßriges Methacrylamidopropyltrimethylammoniumchlorid (MAPTAC) sowie 10 % einer Mischung aus 477,8 g Butylacrylat, 479,2 g Methylmethacrylat (MMA) und 9,8 g Hydroxyethylmethacrylat (HEMA) vorgelegt und auf 80 °C erwärmt. Nach Zugabe von 3,9 g 4,4'-Azobis-(4-cyanovaleriansäure) (AVS) als Initiator wird 15 Minuten vorpolymerisiert. Anschließend wird der Rest der Monomerenmischung innerhalb von 2 Stunden zudosiert. Nach Zugabe von 0,98 g AVS wird 1 Stunde bei 80 °C nachreagieren lassen und die Dispersion auf Raumtemperatur abgekühlt. Man erhält eine feinteilige kationische Disperison mit einem mittleren Teilchendurchmesser von 0,067 µm, einer Kationenaktivität von 183 µmol/g Feststoff (FS) bei $p_H$ 7 und einem Feststoffgehalt von 29,6 Gew.-% (Siebrückstand < 5 g). Das kationische Dispersionscopolymerisat enthält als Monomereinheiten Butylacrylat, MMA und HEMA im Gewichtsverhältnis 50:50:1 sowie außerdem 5,6 Gew.-% MAPTAC, bezogen auf die Gesamtmonomerenmenge. Tabelle 1 enthält die Eigenschaftswerte in zusammengefaßter Form.

### Beispiel 2

Beispiel 1 wird wie folgt abgeändert: Anstelle von MMA wird Styrol eingesetzt und es werden als Emulgator nur 2 Gew.-% Laurylpyridiniumchlorid, bezogen auf die Gesamtmonomerenmenge, verwendet. Die resultierende kationische Disperison hat einen Feststoffgehalt von 29,3 Gew.-% bei einem mittleren

Teilchendurchmesser von 0,058 µm. Die Kationenaktivität beträgt 91 µmol/g FS bei $p_H$ 7. Das kationische Dispersionscopolymerisat enthält als Monomereinheiten Butylacrylat, Styrol und HEMA im Gewichtsverhältnis 70:30:3, sowie außerdem 4 Gew.-% MAPTAC, bezogen auf die Gesamtmonomerenmenge. Tabelle 1 enthält die Eigenschaftswerte in zusammengefaßter Form.

**Beispiel 3**

Beispiel 1 wird wie folgt abgeändert: Es wird das Verhältnis der Comonomerbestandteile wie unten angegeben abgeändert und es werden als Emulgator 4 Gew.-%, bezogen auf die Gesamtmonomerenmenge, Nonylphenolpolyglykolether mit 30 Ethylenoxideinheiten (30 AeO) verwendet. Ferner wird als kationisches Monomeres anstelle von MAPTAC Trimethylammoniumethylacrylat-chlorid (TMAEAC) verwendet. Die resultierende kationische Dispersion hat einen Feststoffgehalt von 32,1 Gew.-% bei einem mittleren Teilchendurchmesser von 0,094 µm. Die Kationenaktivität beträgt 30 µmol/g FS bei $p_H$ 7. Das kationische Dispersionscopolymerisat enthält als Monomereinheiten Butylacrylat, MMA und HEMA im Gewichtsverhältnis 65:35:3, sowie außerdem 2 Gew.-% TMAEAC, bezogen auf die Gesamtmonomerenmenge. Tabelle 1 enthält die Eigenschaftswerte in zusammengefaßter Form.

**Tabelle 1**

| Grundierungsmittel-Beispiele; Anteil an nicht-kationischen Monomereinheiten im Dispersionscopolymerisat (Gewichtsverhältnis) | Initiator bei der Emulsionspolymerisation | Kationisches Comonomer (Gew.-%, bez. auf die Gesamtmonomerenmenge) | Emulgator (Gew.-%, bez. auf die Gesamtmonomerenmenge) | Feststoffgehalt der Dispersion bzw. der Lösung (Gew.-%) | Mittlerer Teilchendurchm. der Disp.-partikel (µm) | Kationenaktivität der Dispersion bei pH 7 (µmol/g FS) |
|---|---|---|---|---|---|---|
| Beispiel 1 - Butylacrylat/MMA/HEMA = 50:50:1 | AVS | 5,6 % MAPTAC[1)] | 3% Laurylpyridiniumchlorid | 29,6 | 0,067 | 183 |
| Beispiel 2 - Butylacrylat/Styrol/HEMA = 70:30:3 | AVS | 4 % MAPTAC[1)] | 2% Laurylpyridiniumchlorid | 29,3 | 0,058 | 91 |
| Beispiel 3 - Butylacrylat/MMA/HEMA = 65:35:3 | AVS | 2 % TMAEAC[2)] | 4% Nonylphenolpolyglykolether (30 AeO) | 32,1 | 0,094 | 30 |
| Vergleichsbeispiel 1 - Anionische Dispersion | | | | 34,6 | 0,047 | |
| Vergleichsbeispiel 2 - Polymerisatharzlösung | | | | | | |

1) MAPTAC = Methacrylamidopropyltrimethylammoniumchlorid
2) TMAEAC = Trimethylammoniumethylacrylatchlorid

## Vergleichsbeispiel 1

Als Vergleich wird eine anionische Grundierungsdispersion, hergestellt nach DE-C 2 531 895, Beispiel 1, mit 34,6 Gew.-% FS und einem mittleren Teilchendurchmesser von 0,047 µm für die nachstehend

beschriebenen vergleichenden Prüfungen verwendet.

**Vergleichsbeispiel 2**

Als weiterer Vergleich wird eine Lösung eines Polymerisatharzes für Grundierungen, hergestellt nach DE-C 2 531 895, Vergleichsbeispiel D, mit ca. 30 Gew.-% FS in Ethylacetat, für die nachstehend beschriebenen vergleichenden Prüfungen verwendet.

Die Anforderungen an die Eigenschaften von wäßrigen Tiefengrundierungen sind z.B. in der DE-C 2 531 895, Seite 3, Zeile 54 ff anhand von anionischen Polymerisat-Dispersionen mit einem mittleren Teilchendurchmesser von 0,02 bis 0,1 µm eingehend beschrieben. Der genannten DE-PS können ferner Beschreibungen der Testmethoden für das Eindringvermögen und die Haftung der Tiefengrundierung auf dem behandelten Substrat bzw. von Folgeanstrichen auf dem grundierten Untergrund entnommen werden.

Die erfindungsgemäß verwendeten wäßrigen kationischen Kunststoffdispersionen wurden nach den im folgenden beschriebenen Anwendungsprüfungen auf ihre Eignung als Tiefengrundierungsmittel untersucht. Entsprechende vergleichende Prüfungen haben zu den nachstehend aufgeführten Ergebnissen geführt.

**Anwendungsprüfungen**

Da das Eindringvermögen der kationischen Dispersionen im Gegensatz zu anionischen Dispersionen auch auf geschliffenem Gipsuntergrund sehr gut ist, wurden jeweils 0,5 ml der auf 17 Gew.-% FS-Gehalt verdünnten kationischen Dispersionen sowohl auf trockenen ungeschliffenen, als auch auf trockenen geschliffenen Gipsuntergrund aufgetropft. Als Vergleich wurden die ebenfalls auf 17 Gew.-% FS-Gehalt verdünnte anionische Dispersion des Vergleichsbeispiels 1 sowie die mit einem handelsüblichen organischen Lösungsmittel (®Shellsol A), das zu ca. 80 Gew.-% aus Aralkylkohlenwasserstoffen vom Siedebereich 165-185 °C besteht, auf 17 Gew.-% FS-Gehalt verdünnte Polymerisatharzlösung des Vergleichsbeispiels 2 in die Prüfung mit einbezogen. Es zeigte sich, daß die unzureichend eindringende anionische Dispersion des Vergleichsbeispiels 1 auf der trockenen, geschliffenen Gipsoberfläche stehen bleibt und unter Filmbildung trocknet. Es wurde deshalb außer der Eindringgeschwindigkeit der Grundierungsmittel auch die mögliche Bildung von oberflächlichen Abscheidungen auf der trockenen, geschliffenen Gipsoberfläche geprüft (Prüfung 1). Das Ergebnis ist nachstehend in der Tabelle "Prüfung 1" zusammengefaßt wiedergegeben.

Das Eindringen in Kalkzementputz wurde an Prismen von 230 g Gewicht festgestellt, die 1 min in die auf 17 Gew.-% FS-Gehalt verdünnten kationischen Dispersionen getaucht wurden. Als Vergleich wurden die ebenfalls auf 17 Gew.-% FS-Gehalt verdünnte anionische Dispersion des Vergleichsbeispiels 1 sowie die mit Shellsol A auf 17 Gew.-% FS-Gehalt verdünnte Polymerisatharzlösung des Vergleichsbeispiels 2 in die Prüfung mit einbezogen (Prüfung 2). Das Ergebnis ist nachstehend in der Tabelle "Prüfung 2" zusammengefaßt wiedergegeben.

**Prüfung 1**

Eindringen in Gipsuntergrund

| Grundierungsmittel aus | 0,5 ml 17 gew.-%iges Grundierungsmittel werden auf Gipsuntergrund aufgetropft und das Eindringverhalten nach 10 min ermittelt.<br>1 = vollständig eingedrungen<br>3 = oberflächliche Abscheidung (Filmbildung)<br>auf geschliffenem Gips | auf ungeschliffenem Gips |
|---|---|---|
| Beispiel 1 | 1 | 1 |
| Beispiel 2 | 1,5 | 1 |
| Beispiel 3 | 1,5 | 1 |
| Vergleichsbeispiel 1 (Anionische Dispersion) | 3 | 1 |
| Vergleichsbeispiel 2 (Polymerisatharzlösung) | 1 | 1 |

**Prüfung 2**

Eindringen in ein Kalkzementputzprisma

| Grundierungsmittel aus | Prismengewicht 230 g, 1 min in 17 gew.-%iges Grundierungsmittel getaucht<br>Gewichtszunahme des behandelten Prismas nach Trocknen bei Raumtemperatur (g) |
|---|---|
| Beispiel 1 | 0,26 |
| Beispiel 2 | 0,31 |
| Beispiel 3 | 0,24 |
| Vergleichsbeispiel 1 (Anionische Dispersion) | 0,29 |
| Vergleichsbeispiel 2 (Polymerisatharzlösung) | 0,22 |

Zur Beurteilung des Schäumens der kationischen Dispersionen kann auf einfache Weise die Schaumbildung während des Verstreichens einer 17 gew.-%igen Dispersion auf dem Untergrund im Vergleich zu anionischen Dispersionen verglichen werden. Hierbei ist die sehr geringe Schaumneigung der kationischen Dispersionen gegenüber dem starken Schäumen der anionischen Dispersion aus Vergleichsbeispiel 1 leicht zu erkennen. Zur quantitativen Beurteilung wurde die Schaumprüfung nach DIN 53 902 durchgeführt.

Hierbei wird die Abnahme einer definiert erzeugten Schaummenge innerhalb von 30 Minuten verfolgt. Für diese Prüfung werden Dispersionen mit einem Feststoffgehalt von ca. 30 Gew.-% verwendet (Prüfung 3). Das Ergebnis ist nachstehend in der Tabelle "Prüfung 3" zusammengefaßt wiedergegeben.

**Prüfung 3**

Schaumprüfung (nach DIN 53 902)

| Grundierungsmittel aus | Schaumvolumen (%) | |
|---|---|---|
| | sofort | nach 30 min |
| Beispiel 1 | 90 | 10 |
| Beispiel 2 | 90 | 0 |
| Vergleichsbsp. 1 (Anionische Dispersion) | 90 | 90 |

Die Sperrwirkung kationischer Dispersionsgrundierungen bzw. -imprägnierungen gegen färbende, wasserlösliche Stoffe wurde durch die folgenden Versuche ermittelt.

Die Sperrwirkung gegen Teerprodukte wurde an Kalkzementputzuntergründen, die zuvor in Tabakrauchatmosphäre gelagert worden waren, geprüft.

Zur Prüfung wurde das zu behandelnde Substrat zunächst mit dem auf 17 Gew.-% verdünnten Grundierungsmittel satt gestrichen (grundiert). Nach 24 Stunden Trocknung bei Raumtemperatur wurde auf die grundierte Fläche ein Lackanstrich aus einer üblichen wäßrigen Acrylatdispersion aufgebracht. Nach der Trocknung des Anstrichs wurde die Verfärbung des Lacks beurteilt. Als Vergleich wurden die ebenfalls auf 17 Gew.-% FS-Gehalt verdünnte anionische Dispersion des Vergleichsbeispiels 1 sowie die mit Shellsol A auf 17 Gew.-% FS-Gehalt verdünnte Polymerisatharzlösung des Vergleichsbeispiels 2 in die Prüfung mit einbezogen (Prüfung 4). Das Ergebnis ist nachstehend in der Tabelle "Prüfung 4" zusammengefaßt wiedergegeben.

**Prüfung 4**

Sperrwirkung gegen färbende, wasserlösliche Stoffe

| Grundierungsmittel aus | 1 x grundiert mit 17 gew.-%igem Grundierungsmittel, 1 x Deckanstrich mit wäßrigem Acrylatharzlack 1 = sehr gute Sperrwirkung 3 = geringe Sperrwirkung auf Kalkzementputz |
|---|---|
| Beispiel 1 | 1,5 |
| Beispiel 2 | 1,5 |
| Beispiel 3 | 1 |
| Vergleichsbsp. 1 (Anionische Dispersion) | 3 |
| Vergleichsbsp. 2 (Polymerisatharzlösung) | 3 |

Wie die Ergebnisse der Prüfungen 1 bis 4 zeigen, dringen die erfindungsgemäßen wäßrigen kationischen Dispersionsgrundierungsmittel auch auf kritischem Untergrund, wie z.B. geschliffenen Gipsflächen, sehr gut ein, im Gegensatz zu vergleichbaren bekannten anionischen Dispersionsgrundierungsmitteln. Dabei ist das Eindringvermögen der erfindungsgemäßen wäßrigen kationischen Grundierungsmittel ebenso gut wie dasjenige vergleichbarer bekannter Lösungsgrundierungsmittel, ohne jedoch die Nachteile der letzteren infolge ihres Lösungsmittelgehaltes zu besitzen. Auch auf anderen Untergründen ist das Eindringen erfindungsgemäßer wäßriger kationischer Grundierungsmittel nicht beeinträchtigt. Die Schaumbildung ist bei kationischen Dispersionen deutlich geringer als bei anionischen Dispersionen.

Die Sperrwirkung gegen färbende, wasserlösliche Stoffe ist bei den erfindungsgemäßen wäßrigen kationischen Grundierungsmitteln deutlich besser als bei vergleichbaren wäßrigen anionischen Grundierungsmitteln und bei Lösungsgrundierungsmitteln.

## Patentansprüche

## Patentansprüche für folgende Vertragsstaaten : AT, BE, CH, DE, FR, GB, GR, IT, LI, LU, NL, SE

**1.** Verwendung von wäßrigen kationischen Kunststoffdispersionen zum Imprägnieren und Grundieren von porösen mineralischen Untergründen, dadurch gekennzeichnet, daß die kationischen Dispersionen kationische Dispersionspolymerisate enthalten, deren Makromoleküle Monomereinheiten (berechnet in Gew.-%, bezogen auf das Polymerisat) aus folgenden Monomerengruppen einpolymerisiert enthalten:

a) 80-99 Gew.-% ethylenisch ungesättige Monomere aus der Gruppe Vinylester, Methacrylester, Acrylester, Vinylaromaten, Vinylchlorid, Ethylen, Acrylnitril, Diester von Maleinsäure und/oder Fumarsäure, Vinylpyrrolidon,

b) 1-20 Gew.-%, vorzugsweise 1-10 Gew.-%, ethylenisch ungesättigte kationische wasserlösliche Monomere, die als kationische Substituenten quaternisierte Alkylammonium-, Alkylsulfonium-, Alkylphosphoniumgruppen, vorzugsweise Alkylammoniumgruppen, enthalten, deren Alkylreste jeweils 1 bis 6 C-Atome aufweisen, wobei einzelne oder mehrere der Alkylreste, vorzugsweise einzelne, durch ($C_5$-$C_7$)-Cycloalkyl, ($C_7$-$C_{24}$)-Aralkyl, vorzugsweise Benzyl ersetzt sein können,

c) 0-19 Gew.-% ethylenisch ungesättigte hydrophile Monomere mit einer oder mehreren funktionellen Gruppen aus der Reihe COOH, $-NR^1R^2$, $-CONR^1R^2$, wobei $R^1$ und $R^2$, die gleich oder verschieden sein können, für H oder $-CH_2OR$ mit R = H oder ($C_1$-$C_8$)-Alkyl stehen, und bis zu 19 Gew.-%

d) ethylenisch ungesättigte Monomere mit einer oder mehreren OH-Gruppen,

die Mindestkationenaktivität der Dispersionen 20 bis 200 µmol pro g Feststoff, gemessen bei pH 7, beträgt und sich 60 bis 99 % der kationischen Ladung auf der Oberfläche der Teilchen befindet, die Dispersionen eine minimale Filmbildungstemperatur (MFT) zwischen 0 und 40 °C, vorzugsweise 0 und 25 °C besitzen, und die Polymerisatpartikel der Dispersionen einen mittleren Teilchendurchmesser von 0,02 bis 0,2 µm, vorzugsweise 0,08 bis 0,15 µm aufweisen.

**2.** Ausführungsform nach Anspruch 1 dadurch gekennzeichnet, daß die kationischen Dispersionen zum Imprägnieren und Grundieren von Mauerwerk, Beton, Putzflächen, geschliffenem Putz, Gipsflächen, oder Mauersteinen verwendet werden.

**3.** Ausführungsform nach einem oder mehreren der Ansprüche 1 und/oder 2, dadurch gekennzeichnet, daß der Feststoffgehalt der kationischen Dispersionen 3 bis 40 Gew.-%, vorzugsweise 5 bis 20 Gew.-%, bezogen auf die Dispersion, beträgt.

**4.** Ausführungsform nach einem oder mehreren der Ansprüche 1 bis 3, dadurch gekennzeichnet, daß die Dispersionen 0,1 bis 20 Gew.-%, vorzugsweise 0,1 bis 7 Gew.-%, oberflächenaktive Verbindungen aus der Gruppe der nichtionischen, kationischen oder amphoteren Emulgatoren sowie gegebenenfalls außerdem zwischen 0 und 5 Gew.-%, vorzugsweise 0,1 bis 2 Gew.-%, Schutzkolloide enthalten, jeweils bezogen auf die Gesamtmonomerenmenge.

**5.** Ausführungsform nach einem oder mehreren der Ansprüche 1 bis 4, dadurch gekennzeichnet, daß die kationischen Dispersionspolymerisate als kationische Monomereinheiten 1-20 Gew.-%, vorzugsweise 1-10 Gew.-%, bezogen auf das Copolymerisat, Verbindungen der Formel (I),

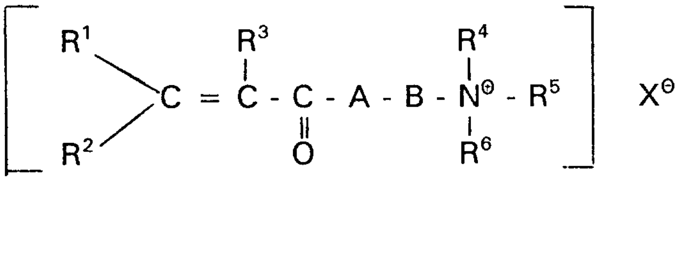

(I)

worin

| | |
|---|---|
| $R^1$, $R^2$, | die gleich oder verschieden sein können, vorzugsweise H, ($C_1$-$C_4$)-Alkyl, Phenyl, das gegebenenfalls durch ($C_1$-$C_5$)-Alkylgruppen substituiert ist, |
| $R^3$ | H oder $CH_3$, |
| $R^4$, $R^5$, | die gleich oder verschieden sein können, ($C_1$-$C_6$)-Alkyl, ($C_5$-$C_7$)-Cycloalkyl, das gegebenenfalls durch ($C_1$-$C_5$)-Alkylgruppen substituiert ist, |

$R^6$ ($C_1$-$C_6$)-Alkyl, Benzyl,
A NH oder O,
B $(CH_2)_{2-4}$, und
X einen anorganischen oder organischen Säurerest, vorzugsweise Halogen oder eine ($C_1$-$C_4$)-Carbonsäure,
bedeuten, enthalten.

**6.** Ausführungsform nach einem oder mehreren der Ansprüche 1 bis 5, dadurch gekennzeichnet, daß die kationischen Kunststoffdispersionen Anteile nichtionogener Kunststoffdispersionen, vorzugsweise bis zu 75 Gew.-%, insbesondere bis zu 50 Gew.-%, besonders bevorzugt bis zu 25 Gew.-% nichtionogenes Dispersionspolymerisat, bezogen auf das kationische Dispersionspolymerisat, enthalten.

**7.** Verfahren zum Imprägnieren und Grundieren von porösen mineralischen Untergründen, dadurch gekennzeichnet, daß man die Untergründe mit wäßrigen kationischen Kunststoffdispersionen nach einem oder mehreren der Ansprüche 1 bis 6 behandelt.

**8.** Verfahren nach Anspruch 7, dadurch gekennzeichnet, daß man als poröse mineralische Untergründe Mauerwerk, Beton, Putzflächen, Gipsflächen und Mauersteine behandelt.

**Patentansprüche für folgenden Vertragsstaat : ES**

**1.** Verfahren zum Imprägnieren und Grundieren von porösen mineralischen Untergründen unter Verwendung von wäßrigen kationischen Kunststoffdispersionen, dadurch gekennzeichnet, daß man die Untergründe mit wäßrigen kationischen Kunststoffdispersionen, die kationische Dispersionspolymerisate enthalten, deren Makromoleküle Monomereinheiten (berechnet in Gew.-%, bezogen auf das Polymerisat) aus folgenden Monomerengruppen einpolymerisiert enthalten:
a) 80-99 Gew.-% ethylenisch ungesättigte Monomere aus der Gruppe Vinylester, Methacrylester, Acrylester, Vinylaromaten, Vinylchlorid, Ethylen, Acrylnitril, Diester von Maleinsäure und/oder Fumarsäure, Vinylpyrrolidon,
b) 1-20 Gew.-%, vorzugsweise 1-10 Gew.-%, ethylenisch ungesättigte kationische wasserlösliche Monomere, die als kationische Substituenten quaternisierte Alkylammonium-, Alkylsulfonium-, Alkylphosphoniumgruppen, vorzugsweise Alkylammoniumgruppen, enthalten, deren Alkylreste jeweils 1 bis 6 C-Atome ausweisen, wobei einzelne oder mehrere der Alkylreste, vorzugsweise einzelne, durch ($C_5$-$C_7$)-Cycloalkyl, ($C_7$-$C_{24}$)-Aralkyl, vorzugsweise Benzyl, oder $-CH_2CONH_2$ ersetzt sein können,
c) 0-19 Gew.-% ethylenisch ungesättigte hydrophile Monomere mit einer oder mehreren funktionellen Gruppen aus der Reihe COOH, $-NR^1R^2$, $-CONR^1R^2$, wobei $R^1$ und $R^2$, die gleich oder verschieden sein können, für H oder $-CH_2OR$ mit R = H oder ($C_1$-$C_8$)-Alkyl stehen, und bis zu 19 Gew.-%
d) ethylenisch ungesättigte Monomere mit einer oder mehreren OH-Gruppen,
die Mindestkationenaktivität der Dispersionen 20 bis 200 µmol pro g Feststoff, gemessen bei pH 7, beträgt und sich 60 bis 99 % der kationischen Ladung auf der Oberfläche der Teilchen befinden, die Dispersionen eine minimale Filmbildungstemperatur (MFT) zwischen 0 und 40 °C, vorzugsweise 0 und 25 °C besitzen und die Polymerisatpartikel der Dispersionen einen mittleren Teilchendurchmesser von 0,02 bis 0,2 µm, vorzugsweise 0,08 bis 0,15 µm aufweisen, behandelt.

**2.** Ausführungssform nach Anspruch 1, dadurch gekennzeichnet, daß man mit den kationischen Dispersionen Mauerwerk, Beton, Putzflächen, geschliffenen Putz, Gipsflächen oder Mauersteine behandelt.

**3.** Ausführungsform nach einem oder mehreren der Ansprüche 1 und/oder 2, dadurch gekennzeichnet, daß der Feststoffgehalt der kationischen Dispersionen 3 bis 40 Gew.-%, vorzugsweise 5 bis 20 Gew.-%, bezogen auf die Dispersion, beträgt.

**4.** Ausführungsform nach einem oder mehreren der Ansprüche 1 bis 3, dadurch gekennzeichnet, daß die Dispersionen 0,1 bis 20 Gew.-%, vorzugsweise 0,1 bis 7 Gew.-%, oberflächenaktive Verbindungen aus der Gruppe der nichtionischen, kationischen oder amphoteren Emulgatoren sowie gegebenenfalls außerdem zwischen 0 und 5 Gew.-%, vorzugsweise 0,1 bis 2 Gew.-%, Schutzkolloide enthalten, jeweils bezogen auf die Gesamtmonomerenmenge.

**5.** Ausführungsform nach einem oder mehreren der Ansprüche 1 bis 4, dadurch gekennzeichnet, daß die kationischen Dispersionspolymerisate als kationische Monomereinheiten 1-20 Gew.-%, vorzugsweise 1-10 Gew.-%, bezogen auf das Copolymerisat, Verbindungen der Formel (I),

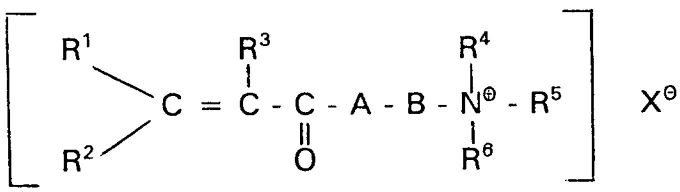 (I)

worin

- $R^1$, $R^2$, die gleich oder verschieden sein können, vorzugsweise H, $(C_1$-$C_4)$-Alkyl, Phenyl, das gegebenenfalls durch $(C_1$-$C_5)$-Alkylgruppen substituiert ist,
- $R^3$ H oder $CH_3$,
- $R^4$, $R^5$, die gleich oder verschieden sein können, $(C_1$-$C_6)$-Alkyl, $(C_5$-$C_7)$-Cycloalkyl, das gegebenenfalls durch $(C_1$-$C_5)$-Alkylgruppen substituiert ist,
- $R^6$ $(C_1$-$C_6)$-Alkyl, Benzyl,
- A NH oder O,
- B $(CH_2)_{2-4}$, und
- X einen anorganischen oder organischen Säurerest, vorzugsweise Halogen oder eine $(C_1$-$C_4)$-Carbonsäure,

bedeuten, enthalten.

**6.** Ausführungsform nach einem oder mehreren der Ansprüche 1 bis 5, dadurch gekennzeichnet, daß die kationischen Kunststoffdispersionen Anteile nichtionogener Kunststoffdispersionen, vorzugsweise bis zu 75 Gew.-%, insbesondere bis zu 50 Gew.-%, besonders bevorzugt bis zu 25 Gew.-% nichtionogenes Dispersionspolymerisat, bezogen auf das kationische Dispersionspolymerisat, enthalten.

## Claims

**Claims for the following Contracting States : AT, BE, CH, DE, FR, GB, GR, IT, LI, LU, NL, SE**

**1.** Use of aqueous cationic synthetic dispersions for impregnating and priming porous mineral substrates, characterized in that the cationic dispersions contain cationic dispersion polymers whose macromolecules contain internal monomeric units (calculated in per cent by weight based on the polymer) selected from the following groups of monomers:

a) 80-99 % by weight of ethylenically unsaturated monomers selected from the group comprising vinyl esters, methacrylic esters, acrylic esters, vinyl aromatic compounds, vinyl chloride, ethylene, acrylonitrile, diesters of maleic acid and/or fumaric acid or vinylpyrrolidone;

b) 1-20 % by weight, preferably 1-10 % by weight, of ethylenically unsaturated cationic water-soluble monomers which contain, as cationic substituents, quaternized alkylammonium, alkylsulfonium and alkylphosphonium groups, preferably alkylammonium groups, whose alkyl radicals in each case have 1 to 6 carbon atoms, it being possible for one or more of the alkyl radicals, preferably for one alkyl radical, to be replaced by $(C_5$-$C_7)$-cycloalkyl or $(C_7$-$C_{24})$-aralkyl, preferably benzyl;

c) 0-19 % by weight of ethylenically unsaturated hydrophilic monomers having one or more functional groups selected from the series including -COOH, $-NR^1R^2$, $-CONR^1R^2$, where $R^1$ and $R^2$ which can be the same or different, stand for H or $-CH_2OR$ (R = H or $(C_1$-$C_8)$-alkyl); and

d) up to 19 % by weight of ethylenically unsaturated monomers having one or several OH groups;

that the minimum cationic activity of the dispersions is 20 to 200 µmol per g of solids, measured at pH 7, and 60 to 99 % of the cationic charge are situated on the surface of the particles, that the dispersions have a minimum film forming temperature (MFT) of between 0 and 40 °C, preferably of between 0 and 25 °C, and that the polymer particles of the dispersions have a mean particle diameter of 0.02 to 0.2 µm, preferably of 0.08 to 0.15 µm.

**2.** The embodiment as claimed in claim 1, wherein the cationic dispersions are used for impregnating and priming masonary, concrete, plaster, smooth plaster, gypsum plaster or bricks.

3. The embodiment as claimed in one or both of claims 1 and 2, wherein the solids content of the cationic dispersions is 3 to 40 % by weight, preferably 5 to 20 % by weight, based on the dispersion.

4. The embodiment as claimed in one or several of claims 1 to 3, wherein the dispersions contain 0.1 to 20 % by weight, preferably 0.1 to 7 % by weight, of surface-active compounds selected from the group including non-ionic, cationic or amphoteric emulsifiers, as well as, optionally, 0 to 5 % by weight, preferably 0.1 to 2 % by weight, of protective colloids, the percentages being in each case based on the total amount of monomers.

5. The embodiment as claimed in one or several of claims 1 to 4, wherein the cationic dispersion copolymers contain, as cationic monomer units, 1-20 % by weight, preferably 1-10 % by weight, based on the copolymer, of compounds of the formula (I),

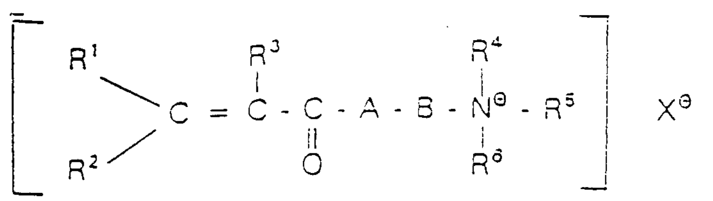

(I)

where

| | |
|---|---|
| $R^1$, $R^2$, | which can be the same or different, preferably denote H, $(C_1$-$C_4)$-alkyl or phenyl which is optionally substituted by $(C_1$-$C_5)$-alkyl groups, |
| $R^3$ | denotes H or $CH_3$, |
| $R^4$, $R^5$ | which can be the same or different, denote $(C_1$-$C_6)$-alkyl, $(C_5$-$C_7)$-cycloalkyl which is optionally susbstituted by $(C_1$-$C_5)$-alkyl groups, |
| $R^6$ | denotes $(C_1$-$C_6)$-alkyl or benzyl, |
| A | denotes NH or O, |
| B | denotes $(CH_2)_{2-4}$, and |
| X | denotes an inorganic or organic acid radical, preferably halogen or a $(C_1$-$C_4)$carboxylic acid. |

6. The embodiment as claimed in one or several of claims 1 to 5, wherein the cationic synthetic dispersions contain a proportion of non-ionic synthetic dispersions, the proportion of non-ionogenic dispersion polymer preferably amounting to up to 75 % by weight, in particular up to 50 % by weight, and most preferably up to 25 % by weight, relative to the cationic dispersion polymer.

7. Process for impregnating and priming porous mineral substrates, wherein said substrates are treated with aqueous cationic synthetic dispersions as claimed in one or several of claims 1 to 6.

8. The process as claimed in claim 7, wherein the porous mineral substrates treated comprise masonary, concrete, plaster, gypsum plaster and bricks.

**Claims for the following Contracting State : ES**

1. Process for impregnating and priming porous mineral substrates using aqueous cationic synthetic dispersions, characterized in that said substrates are treated with aqeuous cationic synthetic dispersions which contain cationic dispersion polymers whose macromolecules contain internal monomeric units (calculated in per cent by weight based on the polymer) selected from the following groups of monomers:

a) 80-99 % by weight of ethylenically unsaturated monomers selected from the group comprising vinyl esters, methacrylic esters, acrylic esters, vinyl aromatic compounds, vinyl chloride, ethylene, acrylonitrile, diesters of maleic acid and/or fumaric acid or vinylpyrrolidone;

b) 1-20 % by weight, preferably 1-10 % by weight, of ethylenically unsaturated cationic water-soluble monomers which contain, as cationic substituents, quaternized alkylammonium, alkylsulfonium and alkylphosphonium groups, preferably alkylammonium groups, whose alkyl radicals in

each case have 1 to 6 carbon atoms, it being possible for one or more of the alkyl radicals, preferably for one alkyl radical, to be replaced by ($C_5$-$C_7$)-cycloalkyl or ($C_7$-$C_{24}$)-aralkyl, preferably benzyl;

c) 0-19 % by weight of ethylenically unsaturated hydrophilic monomers having one or more functional groups selected from the series including -COOH, -$NR^1R^2$, -$CONR^1R^2$, where $R^1$ and $R^2$ which can be the same or different, stand for H or -$CH_2OR$ (R = H or ($C_1$-$C_8$)-alkyl); and

d) up to 19 % by weight of ethylenically unsaturated monomers having one or several OH groups;

that the minimum cationic activity of the dispersions is 20 to 200 µmol per g of solids, measured at pH 7, and 60 to 99 % of the cationic charge are situated on the surface of the particles, that the dispersions have a minimum film forming temperature (MFT) of between 0 and 40 °C, preferably of between 0 and 25 °C, and that the polymer particles of the dispersions have a mean particle diameter of 0.02 to 0.2 µm, preferably of 0.08 to 0.15 µm.

**2.** The embodiment as claimed in claim 1, wherein masonary, concrete, plaster, smooth plaster, gypsum plaster or bricks are treated with the cationic disperions.

**3.** The embodiment as claimed in one or both of claims 1 and 2, wherein the solids content of the cationic dispersions is 3 to 40 % by weight, preferably 5 to 20 % by weight, based on the dispersion.

**4.** The embodiment as claimed in one or several of claims 1 to 3, wherein the dispersions contain 0.1 to 20 % by weight, preferably 0.1 to 7 % by weight, of surface-active compounds selected from the group including non-ionic, cationic or amphoteric emulsifiers, as well as, optionally, 0 to 5 % by weight, preferably 0.1 to 2 % by weight, of protective colloids, the percentages being in each case based on the total amount of monomers.

**5.** The embodiment as claimed in one or several of claims 1 to 4, wherein the cationic dispersion copolymers contain, as cationic monomer units, 1-20 % by weight, preferably 1-10 % by weight, based on the copolymer, of compounds of the formula (I),

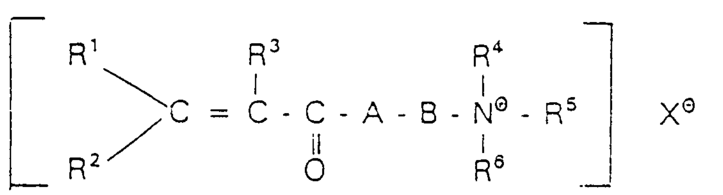

(I)

where

| | |
|---|---|
| $R^1$, $R^2$, | which can be the same or different, preferably denote H, ($C_1$-$C_4$)-alkyl or phenyl which is optionally substituted by ($C_1$-$C_5$)-alkyl groups, |
| $R^3$ | denotes H or $CH_3$, |
| $R^4$, $R^5$ | which can be the same or different, denote ($C_1$-$C_6$)-alkyl, ($C_5$-$C_7$)-cycloalkyl which is optionally susbstituted by ($C_1$-$C_5$)-alkyl groups, |
| $R^6$ | denotes ($C_1$-$C_6$)-alkyl or benzyl, |
| A | denotes NH or O, |
| B | denotes $(CH_2)_{2-4}$, and |
| X | denotes an inorganic or organic acid radical, preferably halogen or a ($C_1$-$C_4$)carboxylic acid. |

**6.** The embodiment as claimed in one or several of claims 1 to 5, wherein the cationic synthetic dispersions contain a proportion of non-ionic synthetic dispersions, the proportion of non-ionogenic dispersion polymer preferably amounting to up to 75 % by weight, in particular up to 50 % by weight, and most preferably up to 25 % by weight, relative to the cationic dispersion polymer.

**Revendications**

**Revendications pour les Etats contractants suivants : AT, BE, CH, DE, FR, GB, GR, IT, LI, LU, NL, SE**

1. Utilisation de dispersions cationiques aqueuses de matières plastiques pour l'imprégnation et l'enduction de subjectiles minéraux poreux, caractérisée en ce que les dispersions cationiques contiennent des polymères dispersés cationiques dont les macromolécules contiennent des motifs monomères polymérisés (calculé en pourcentage en poids par rapport au polymère) des groupes monomères suivants :
   a) de 80 à 99% en poids de monomères à insaturation éthylénique pris dans le groupe comportant des esters vinyliques, des esters méthacryliques, des esters acryliques, des composés vinylaromatiques, le chlorure de vinyle, l'éthylène, l'acrylonitrile, des diesters de l'acide maléique et/ou de l'acide fumarique, la vinylpyrrolidone,
   b) de 1 à 20% en poids, de préférence de 1 à 10% en poids de monomères cationiques à insaturation éthylénique solubles dans l'eau, qui contiennent comme substituants cationiques des groupes quaternisés alkylammonium, alkylsulfonium, alkylphosphonium de préférence des groupes alkylammonium, dont les radicaux alkyle présentent chacun de 1 à 6 atomes de carbone, les radicaux alkyle seuls ou plusieurs, de préférence seuls, pouvant être remplacés par cycloalkyle en $C_5$-$C_7$, aralkyle en $C_7$-$C_{24}$, de préférence benzyle,
   c) de 0 à 19% en poids de monomères à insaturation éthylénique hydrophiles, avec un ou plusieurs groupes fonctionnels du groupe COOH, $-NR^1R^2$, $-CONR^1R^2$, où $R^1$ et $R^2$, qui peuvent être identiques ou différents, représentent H ou $-CH_2OR$ avec R étant égal à H ou alkyle en $C_1$-$C_8$,
   d) et jusqu'à 19% en poids de monomères à insaturation éthylénique avec un ou plusieurs groupes OH, que l'activité cationique minimale des dispersions est de 20 à 200 $\mu$moles/g de matière solide mesurée a un pH 7, et de 60 à 99 % de la charge cationique se trouve sur la surface des particules, que les dispersiones ont une température de formation de film (TFF) minimale comprise entre 0 et 40 °C, de préférence entre 0 et 25 °C, et que les particules polymères des dispersions présentent une granulométrie moyenne de 0,02 à 0,2 $\mu$m, de préférence de 0,00 à 0,15 $\mu$m.

2. Mode de réalisation selon la revendication 1, caractérisé en ce qu'on utilise les dispersions cationiques pour l'imprégnation et l'enduction d'ouvrages de maçonnerie, du béton, de surfaces d'enduits, d'enduits rectifiés, de surfaces de plâtre ou de pierres de construction.

3. Mode de réalisation selon une ou plusieurs des revendications 1 et/ou 2, caractérisé en ce que la teneur en matières solides des dispersions cationiques est de 3 à 40% en poids, de préférence de 5 à 20% en poids par rapport à la dispersion.

4. Mode de réalisation selon une ou plusieurs des revendications 1 à 3, caractérisé en ce que les dispersions contiennent de 0,1 à 20% en poids, de préférence de 0,1 à 7% en poids de composés tensio-actifs pris dans le groupe d'émulsifiants non ioniques, cationiques ou amphotères ainsi qu'éventuellement de plus une teneur comprise entre 0 et 5% en poids, de préférence entre 0,1 et 2% en poids de colloïdes protecteurs, chaque fois par rapport à la quantité totale des monomères.

5. Mode de réalisation selon une ou plusieurs des revendications 1 à 4, caractérisé en ce que les polymères dispersés cationiques contiennent comme motifs monomères cationiques de 1 à 20% en poids, de préférence de 1 à 10% en poids, par rapport au copolymère, de composés de formule (I)

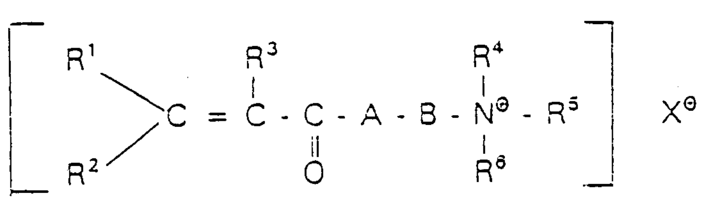

(I)

dans laquelle

| | |
|---|---|
| $R^1$, $R^2$, | qui peuvent être identiques ou différents, représentent de préférence H, alkyle en $C_1$-$C_4$, phényle, qui est éventuellement substitué par des groupes alkyle en $C_1$-$C_5$, |
| $R^3$ | représente H ou $CH_3$, |
| $R^4$, $R^5$, | qui peuvent être identiques ou différents, représentent alkyle en $C_1$-$C_6$, cycloalkyle en |

$C_5$-$C_7$ qui peut être eventuellement substitué par des groupes alkyles en $C_1$-$C_5$,

| | |
|---|---|
| $R^6$ | représente alkyle en $C_1$-$C_6$ ou benzyle, |
| A | représente NH ou O |
| B | représente $(CH_2)_{2-4}$, et |
| X | représente un radical d'acide minéral ou organique, de préférence un halogène ou un acide carboxylique en $C_1$-$C_4$. |

**6.** Mode de réalisation selon une ou plusieurs des revendications 1 à 5, caractérisé en ce que les dispersions cationiques de matières plastiques contiennent des portions de dispersions de matières plastiques non ioniques, de préférence jusqu'à 75% en poids, plus particulièrement jusqu'à 50% en poids, de manière particulièrement préférée jusqu'à 25% en poids, de polymère dispersé non ionique, par rapport au polymère dispersé cationique.

**7.** Procédé pour l'imprégnation et l'enduction de subjectiles minéraux poreux, caractérisé en ce qu'on traite les subjectiles avec des dispersions aqueuses de matières plastiques cationiques selon une ou plusieurs des revendications 1 à 6.

**8.** Procédé selon la revendication 7, caractérisé en ce qu'on traite en tant que subjectiles minéraux poreux des ouvrages de maçonnerie, le béton, des surfaces d'enduits, des surfaces de plâtre et des pierres de construction.

**Revendications pour l'Etat contractant suivant : ES**

**1.** Procédé pour l'imprégnation et l'enduction de subjectiles minéraux poreux en utilisant des dispersions cationiques aqueuses de matières plastiques, caractérisé en ce qu'on traite les subjectiles avec des dispersions cationiques aqueuses de matières plastiques qui contiennent des polymères dispersés cationiques dont les macromolécules contiennent des motifs monomères polymérisés (calculé en pourcentage en poids par rapport au polymère) des groupes monomères suivants :

a) de 80 à 99% en poids de monomères à insaturation éthylénique pris dans le groupe comportant des esters vinyliques, des esters méthacryliques, des esters acryliques, des composés vinylaromatiques, lee chlorure de vinyle, l'éthylène, l'acrylonitrile, des diesters de l'acide maléique et/ou de l'acide fumarique, la vinylpyrrolidone,

b) de 1 à 20% en poids, de préférence de 1 à 10% en poids de monomères cationiques à insaturation éthylénique solubles dans l'eau qui contiennent comme substituants cationiques des groupes quaternisés alkylammonium, alkylsulfonium, alkylphosphonium, de préférence des groupes alkylammonium, dont les radicaux alkyle présentent chacun de 1 à 6 atomes de carbone, les radicaux alkyle seuls ou plusieurs, de préférence seuls pouvant être remplacés par cycloalkyle en $C_5$-$C_7$, aralkyle en $C_7$-$C_{24}$, de préférence benzyle,

c) de 0 à 19% en poids de monomères à insaturation éthylénique hydrophiles, avec un ou plusieurs groupes fonctionnels du groupe COOH, $-NR^1R^2$, $-CONR^1R^2$, où $R^1$ et $R^2$ qui peuvent être identiques ou différents, représentent H ou $-CH_2OR$ avec R étant égal à H ou alkyle en $C_1$-$C_8$,

d) et jusqu'à 19% en poids de monomères à insaturation éthylénique avec un ou plusieurs groupes OH, que l'activité cationique minimale des dispersions est de 20 à 200 $\mu$moles/g de matière solide mesurée à un pH 7, et de 60 à 99 % de la charge cationique se trouve sur la surface des particules, que les dispersions ont une température de formation de film (TFF) minimale comprise entre 0 et 40 °C, de préférence entre 0 et 25 °C, et que les particules polymères des dispersions présentent une granulométrie moyenne de 0,02 à 0,2 $\mu$m, de préférence de 0,08 à 0,15 $\mu$m.

**2.** Mode de réalisation selon la revendication 1, caractérisé en ce qu'on utilise les dispersions cationiques pour le traitement d'ouvrages de maçonnerie, du béton, de surfaces d'enduits, d'enduits rectifiés, de surfaces de plâtre ou de pierres de construction.

**3.** Mode de réalisation selon une ou plusieurs des revendications 1 et/ou 2, caractérisé en ce que la teneur en matières solides des dispersions cationiques est de 3 à 40% en poids, de préférence de 5 à 20% en poids par rapport à la dispersion.

**4.** Mode de réalisation selon une ou plusieurs des revendications 1 à 3, caractérisé en ce que les dispersions contiennent de 0,1 à 20% en poids, de préférence de 0,1 à 7% en poids de composés

tensio-actifs pris dans le groupe d'émulsifiants non ioniques, cationiques ou amphotères ainsi que éventuellement de plus une teneur comprise entre 0 et 5% en poids, de préférence entre 0,1 et 2% en poids de colloïdes protecteurs, chaque fois par rapport à la quantité totale des monomères.

**5.** Mode de réalisation selon une ou plusieurs des revendications 1 à 4, caractérisé en ce que les polymères dispersés cationiques contiennent comme motifs monomères cationiques de 1 à 20% en poids, de préférence de 1 à 10% en poids, par rapport au copolymère, de composés de formule (I)

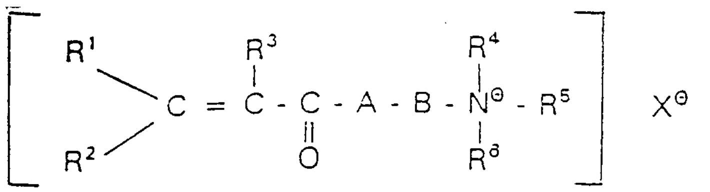 (I)

dans laquelle

| | |
|---|---|
| $R^1$, $R^2$, | qui peuvent être identiques ou différents, représentent de préférence H, alkyle en $C_1$-$C_4$, phényle qui est éventuellement substitué par des groupes alkyle en $C_1$-$C_5$, |
| $R^3$ | représente H ou $CH_3$, |
| $R^4$, $R^5$, | qui peuvent être identiques ou différents, représentent alkyle en $C_1$-$C_6$, cycloalkyle en $C_5$-$C_7$ qui peut être éventuellement substitué par des groupes alkyles en $C_1$-$C_5$, |
| $R^6$ | représente alkyle en $C_1$-$C_6$ ou benzyle |
| A | représente NH ou O |
| B | représente $(CH_2)_{2-4}$, et |
| X | représente un radical d'acide minéral ou organique, de préférence un halogène ou un acide carboxylique en $C_1$-$C_4$. |

**6.** Mode de réalisation selon une ou plusieurs des revendications 1 à 5, caractérisé en ce que les dispersions cationiques de matières plastiques contiennent des portions de dispersion de matières plastiques non ioniques, de préférence jusqu'à 75% en poids, plus particulièrement jusqu'à 50% en poids, de manière particulièrement préférée jusqu'à 25% en poids, de polymère dispersé non ionique par rapport au polymère dispersé cationique.